# EUROPEAN PATENT APPLICATION

(11) **EP 1 860 402 A1**
(43) Date of publication of application: **28.11.2007**
(21) Application number: 07010360.1
(22) Date of filing: 24.05.2007
(51) Int. Cl.: G01C 19/56, G01P 15/125, G01P 15/14

(54) **Angular rate sensor**

(30) Priority: 24.05.2006 JP 2006143518
(71) Applicant: HITACHI METALS, LTD., Minato-ku, Tokyo 105-8614 (JP)
(72) Inventor: Kazama, Atsushi, Chiyoda-ku, Tokyo 100-8220 (JP); Nakamura, Shigeo, Chiyoda-ku, Tokyo 100-8220 (JP)
(74) Representative: Beetz & Partner

(57) **Abstract**

An angular rate sensor formed into a planar shape, which detects an angular rate around a first axis in the plane, includes a rotating oscillator rotatably supported in the plane and around the rotational axis in a direction of a second axis perpendicular to the first axis; vibration generating means which rotationally vibrates the rotating oscillator; and a first detecting oscillator and a second detecting oscillator which are disposed inside the rotating oscillator and separately on the right side and the left side of the rotational axis, and which are supported as being displaceable in a direction of the second axis. A first detecting unit and a second detecting unit, which detect vibrations of the respective first and second detecting oscillators in the direction of the second axis due to the Coriolis force, are respectively provided closer to the rotational axis than the first and second detecting oscillators are.

## Description

### BACKGROUND OF THE INVENTION

### 1. Field of the Invention

The present invention relates to a small sensor for detecting an angular rate.

### 2. Description of the Related Art

In recent years, researches for fabricating mass-producible small acceleration sensors by using silicon substrates and the like for a material, and by adapting the semiconductor manufacturing techniques, are actively pursued in the field of microelectromechanical systems (MEMS) as the techniques for achieving angular rate sensors (gyroscope sensors).

The mainstream of the above-mentioned techniques is called vibration gyroscope. When a direction of the rotational axis of an angular rate to be measured is defined as a first axis, the vibration gyroscope causes an oscillator to vibrate in a direction of a second axial which is perpendicular to the first axis (driving vibration), and then vibration (detected vibration) due to the Coriolis force which is generated in a direction of a third axis perpendicular to both of the first axis and the second axis, and which is proportional to the angular rate.

The extremely small vibration to be detected requires various special designs in order to detect the vibration with high accuracy. Specifically, as the detected vibration is proportional to the amplitude of the driving vibration, the vibration gyroscope adopts special designs such as to increase the amplitude of driving vibration by driving the oscillator at a resonant frequency, or to increase the amplitude of the detected vibration by aligning a resonant frequency for detection with a frequency on the driving side. This technique has a problem of noise generation because application of acceleration to the driving vibration in the same direction as that of the detected vibration may cause displacement of the driving vibration in the same direction as that of the detected vibration, which is inseparable from target vibration.

Japanese Patent Application Laid-open No. 2000-74676 discloses a conventional angular rate sensor. In this angular rate sensor, two sensor elements having the same structure are arranged, and two oscillators are caused to vibrate in reversed phases from each other. As a consequence, the values of detected vibration are also formed into reversed phases while displacements due to acceleration are in the same phase. In this way, an acceleration component is cancelled by finding the difference between detection signals from the respective two oscillators.

Japanese Patent Translation Publication No. 2003-509670 discloses another conventional angular rate sensor. With this angular rate sensor, driving vibration is provided to a discoid oscillator by rotationally vibrating the oscillator around a torsion beam, and besides the Coriolis force applied to the oscillator is detected by converting the force to a rotation of a detecting oscillator. This detecting oscillator is designed to reduce noises by rendering the detecting oscillator less displaceable in directions other than the rotating direction, and less reactable with acceleration as well as with angular rates in directions other than the direction of a target angular rate.

### SUMMARY OF THE INVENTION

In order to perform accurate detection with the method of differential detection disclosed in Japanese Patent Application Laid-open No. 2000-74676, it is necessary to drive the two oscillators synchronously, and to conform detection sensitivities of the respective two oscillators to each other. However, due to problems of fabrication accuracy and so forth, it is difficult to align resonant frequencies between the two oscillators. The angular rate sensor according to Japanese Patent Application Laid-open No. 2000-74676 resolves this problem with a separate mechanism provided for adjusting the resonant frequencies by applying electrostatic force. However, the configuration and control operations in the configuration are made complicated with the added resonant-frequency adjustment mechanism, and there is still room for improvement by simplifying the structure and facilitating the control operations.

The angular rate sensor according to Japanese Patent Translation Publication No. 2003-509670 uses the Coriolis force, which acts in the parallel direction to the rotational axis of the discoid oscillator, as detected vibration torque around the axis perpendicular to the rotational axis. For this reason, it is not always possible to utilize the entire Coriolis force component as the detected vibration torque. Hence, there is still room for improving detection sensitivity.

An object of the present invention is to provide an angular rate sensor capable of increasing the amplitude of detected vibration while reducing noises stemming from acceleration components and the like, and thereby achieving high detection sensitivity.

To attain the object, the present invention provides a sensor element which is formed into a planar shape, and which detects the angular rate around a first axis on the plane. The sensor element includes: a rotating oscillator rotatably supported on the plane and around a rotational axis of the direction of a second axis perpendicular to the first axis; vibration generating means which rotationally vibrates the rotating oscillator; and a first detecting oscillator and a second detecting oscillator which are disposed inside the rotating oscillator and separately on the right side and the left side of the rotational axis, and which are supported as being displaceable in the direction of the second axis. Here, a first detecting unit and a second detecting unit, which detect vibrations of the respective first and second detecting oscillators in the direction of the second axis due to the Coriolis force , are respectively provided closer to the rotational axis than the first and second detecting oscillators are.

According to the angular rate sensor of the present invention, the first detecting oscillator and the second detecting oscillator vibrate in mutually reversed phases in a direction of a third axis perpendicular to the plane of the sensor element as the rotating oscillator rotationally vibrates around the rotational axis. Thereby, detected vibration in the direction of the second axis is also converted into a reversed phase. Thus, it is possible to cancel detection signals in the same phase caused by acceleration in the direction of the second axis by finding the difference between detection signals outputted by the respective first and second detecting units, and thereby to reduce noises. Moreover, the first and second detecting oscillators are disposed inside the single rotating oscillator, and driving vibration in the direction of the third axis is given by the vibration of the rotating oscillator. Accordingly, it is structurally guaranteed that the amplitudes of the vibrations of both of the detecting oscillators coincide with each other, and the reversal of the phases. By driving the rotating oscillator by use of a resonant frequency, it is possible to align the amplitudes and to obtain large vibration. Thereby, it is made possible to increase the detected vibration, and to achieve high detection sensitivity. In addition, by disposing the detecting oscillators farther from the rotational axis while disposing the detecting units closer to the rotational axis, it is possible to increase the amplitudes of the detecting oscillators more than those of the respective detecting units for the same rotation-angle amplitude. Hence, it is possible to improve the detection sensitivity, and to reduce driving amplitudes of the detecting units (vibration amplitudes in the direction of the third axis). In this way, it is possible to reduce an influence of the driving vibration applied to the detection of the detected vibration in the direction of the second axis, and thereby to reduce noises.

### BRIEF DESCRIPTION OF THE DRAWINGS

Fig. 1 is a schematic cross-sectional view of an angular rate sensor according to a first embodiment of the present invention.
Fig. 2 is a schematic plan view showing a structure of an element substrate of the angular rate sensor according to the first embodiment.
Fig. 3 is a schematic cross-sectional view for explaining an example of a method of driving a rotating oscillator.
Fig. 4 is a schematic diagram showing an example of a configuration of a detection circuit.
Fig. 5 is a schematic cross-sectional view showing an example of a configuration of an angular rate sensor module combined with a control IC.
Fig. 6 is a schematic diagram showing an example of a module configuration for achieving biaxial angular rate detection according to a second embodiment.
Fig. 7 is a schematic plan view showing a structure of an element substrate of an angular rate sensor according to a third embodiment.
Fig. 8 is a schematic plan view showing a structure of an element substrate of an angular rate sensor according to a fourth embodiment.
Fig. 9 is a schematic plan view showing a structure of an element substrate of an angular rate sensor according to a fifth embodiment.

### DETAILED DESCRIPTION OF THE PREFERRED EMBODIMENTS

The preferred embodiments of the present invention will be described below with reference to the accompanying drawings. It is to be noted that the same reference numerals designated in the drawings for the embodiments indicate identical or equivalent constituents.

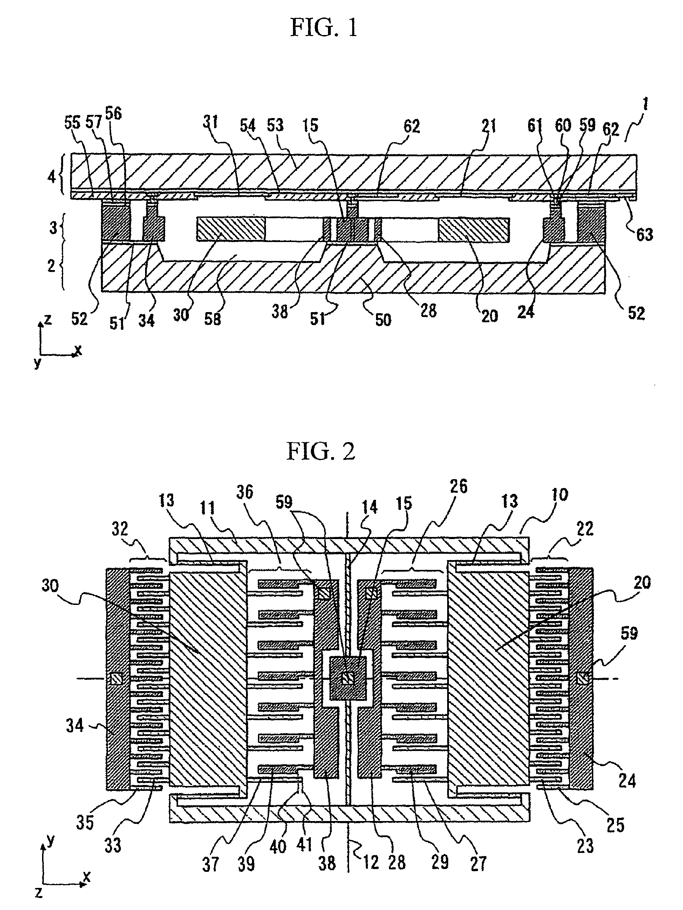

An angular rate sensor according to a first embodiment of the present invention will be described with reference to Figs. 1 to 3. Fig. 1 is a cross-sectional view of this embodiment, and Fig. 2 is a schematic plan view of an element substrate of this embodiment.

As shown in Fig. 1, an angular rate sensor 1 of this embodiment includes three layers of a support substrate 2, an element substrate 3 and a wiring substrate 4. A movable portion of the sensor is formed inside the element substrate 3, and the structure inside the element substrate 3 includes a portion bonded and fixed to the support substrate 2, and another portion separated from the support substrate 2 and displaceably supported inside the element substrate 3.

A structure of the element substrate 3 will be described with reference to Fig. 2. In the following explanation, the lateral direction of Fig. 2 is defined as an x direction, the longitudinal direction thereof is defined as a y direction, and the vertical direction to Fig. 2 is defined as a z direction. The angular rate sensor for detecting an angular rate around an axis in the x direction is achieved with the configuration to be described below. A rotating oscillator 10 includes two transverse frames 11 extending in the x direction, and a first detecting oscillator 20 and a second detecting oscillator 30 respectively disposed at the right side and the left side of a rotational axis 12. The first and second detecting oscillators 20 and 30 are respectively supported by the transverse frames 11 via two support beams 13 provided for each detecting oscillator. Moreover, the transverse frames 11 are connected to an anchor 15 respectively with two torsion beams 14 disposed along the rotational axis 12. The anchor 15 is partially bonded to the support substrate 2, and thereby is fixed thereto. The torsion beams 14, the transverse frames 11, the support beams 13, the first detecting oscillator 20 and the second detecting oscillator 30 are separated from the support substrate 2, and thus can be displaced. The rotating oscillator 10 can rotate around the rotational axis 12 by the torsion beams 14 being twisted, and the first and second rotating oscillators 20 and 30 are displaceable in the y direction by the support beams 13 being bent.

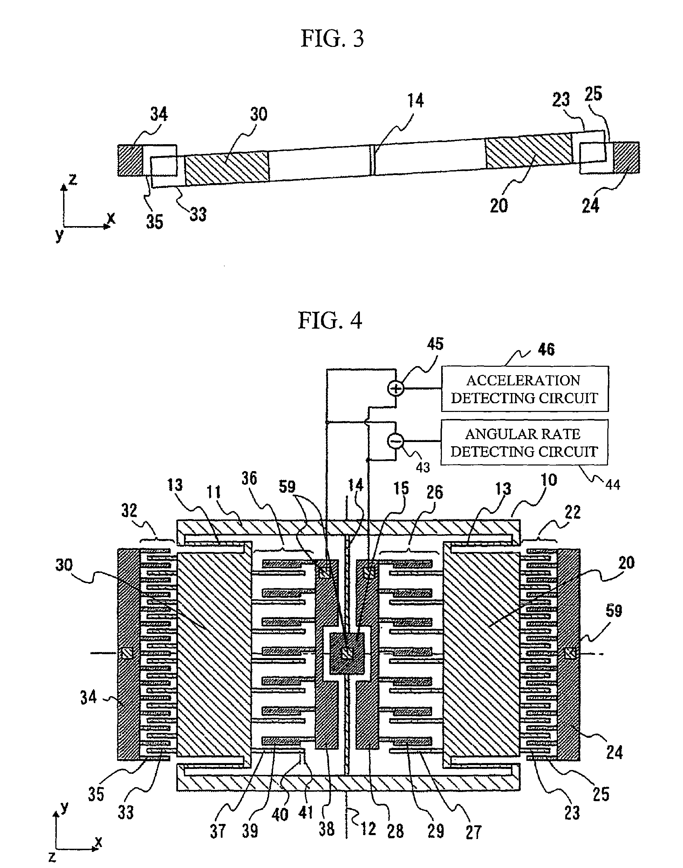

As shown in Fig. 1, a first driving flat electrode 21 and a second driving flat electrode 31 are provided on the wiring substrate 4 as driving means which drives the rotating oscillator 10. For the element substrate 3, a silicon substrate with its conductivity improved by impurity implantation is used, for example. Thus, the element substrate 3 possesses conductivity. Electrostatic attraction between the rotating oscillator 10 and the driving flat electrodes 21 and 31 is generated by maintaining the rotating oscillator 10 to have equipotential while alternately providing the first and second driving flat electrodes 21 and 31 with an electric potential which is different from that of the rotating oscillator 10. In this way, it is possible to vibrate the rotating oscillator 10 around the rotational axis 12. Moreover, in order to improve a driving force, a first driving unit 22 and a second driving unit 32 may be provided outside the respective first and second detecting oscillators 20 and 30 as shown in Fig. 1. Multiple first movable-side driving comb-shaped electrodes 23 connected to the first detecting oscillator 20 and multiple first fixed-side driving comb-shaped electrodes 25 connected to a first driving comb support 24 which is partially bonded to the support substrate 2, are alternately arranged in the first driving unit 22. Similarly, multiple second movable-side driving comb-shaped electrodes 33 connected to the second detecting oscillator 30 and multiple second fixed-side driving comb-shaped electrodes 35 connected to a second driving comb support 34 which is partially bonded to the support substrate 2, are alternately arranged in the second driving unit 32. Suppose a timing when the inclined rotation oscillator 10 causes the first movable-side driving comb-shaped electrodes 23 to be shifted in the z direction from the first fixed-side driving comb-shaped electrodes 25, or when the inclined rotation oscillator 10 causes the second movable-side driving comb-shaped electrodes 33 to be shifted in the z direction from the second fixed-side driving comb-shaped electrodes 35. At this timing, as shown in a schematic cross-sectional view in Fig. 3, the electrostatic attraction is generated by providing the electric potential difference between the two sets of electrodes. In this way, a force for restituting the inclined rotating oscillator 10 is generated. It is possible to obtain large driving vibration with small electric power by concurrently controlling the first and second driving flat electrodes 21 and 31 as well as the first and second driving units 22 and 32 provided with the comb-shaped electrodes in tandem.

As shown in Fig. 2, the first and second detecting oscillators 20 and 30 are respectively provided with a first detecting unit 26 and a second detecting unit 36 as means which senses vibration of the detecting oscillators. The first and second detecting units 26 and 36 are disposed in positions closer to the rotational axis 12 as compared to the first and second detecting oscillators 20 and 30. This embodiment employs a symmetrical configuration in which the rotational axis 12 is set as the axis of symmetry. Multiple first movable-side detecting comb-shaped electrodes 27 connected to the first detecting oscillator 20 and multiple first fixed-side detecting comb-shaped electrodes 29 connected to a first detecting comb support 28 which is partially bonded to the support substrate 2, are alternately arranged in the first detecting unit 26. Similarly, multiple second movable-side detecting comb-shaped electrodes 37 connected to the second detecting oscillator 30 and multiple second fixed-side detecting comb-shaped electrodes 39 connected to a second detecting comb support 38 which is partially bonded to the support substrate 2, are alternately arranged in the second detecting unit 36. The movable-side detecting comb-shaped electrodes are displaced along with displacement of the detecting oscillators in the y direction, and gaps thereof with the fixed-side detecting comb-shaped electrodes are therefore changed. Thereby, the first and second detecting units 26 and 36 detect changes in electrostatic capacitance associated with the changes in the gaps. Since the first detecting oscillator 20 and the second detecting oscillator 30 vibrate in reversed phases in the z direction due to rotational vibration of the rotating oscillator 10, the vibration in the y direction due to the Coriolis force generated by an angular velocity around a detection axis in the x direction is also formed in reversed phases between the first and second detecting oscillators 20 and 30. Accordingly, the electrostatic capacitance in one of the first and second detecting units 26 and 36 is increased, while the electrostatic capacitance in the other oscillator is decreased. Here, considering a case where acceleration in the y direction is applied to the angular rate sensor of this embodiment, the first and second detecting oscillators 20 and 30 are displaced in the same direction, and thus the changes in the electrostatic capacitance of the detecting units are either increased or decreased at the same time. By finding a difference in detection signals between the first and second detecting units 26 and 36, the detection signals in the same phase due to the acceleration are cancelled while the detection signals in the reversed phases due to the angular rate is doubled. Thus, it is possible to remove noises stemming from the acceleration, and to double the detection sensitivity for the target angular rate. In contrast, by calculating a sum of the detection signals, it is also possible to detect the acceleration in the y direction by cancelling the angular rate around the x axis. In the present invention, the vibration of the first and second detecting oscillators 20 and 30 in the z direction is given by the rotational vibration of the single rotating oscillator 10. Hence, the amplitudes of the respective first and second detecting oscillators 20 and 30 are aligned, and the reversal of the phases is structurally guaranteed. In this way, it is possible to enhance detection sensitivity utilizing a differential between both of the detecting oscillators. Now, the configuration of the detecting units will be described with reference to Fig. 4. Signals extracted from the first and second detecting units 26 and 36 are connected to a subtracter 43 to calculate the difference, and an output therefrom is inputted to an angular rate detecting circuit 44 to obtain an angular rate detection signal. Moreover, the signals extracted from the first and second detecting units 26 and 36 are also connected to an adder 45 to calculate the sum of the extracted signals, and an output therefrom in inputted to an acceleration detecting circuit 46 to obtain an acceleration detection signal.

The present invention provides a configuration in which the vibration of the detecting oscillators in the z direction is given by means of the rotational vibration. Here, the present invention is characterized in that the first and second detecting units 26 and 36 are disposed close to the rotational axis 12 than the first and second detecting oscillators 20 and 30. Since the detecting oscillators are located at a longer distance from the rotational axis, the detecting oscillator has the larger amplitude of vibration in the z direction for the same rotation angle amplitude of the same rotating oscillator. As the Coriolis force is in proportion to the speed of the oscillator, the Coriolis force becomes larger as the amplitude of vibration is greater in a case where the frequency is constant. Accordingly, it is possible to improve the detection sensitivity. On the other hand, the movable-side detecting comb-shaped electrodes of the detecting units are at a shorter distance from the rotational axis. Hence, the amplitude of vibration thereof in the z direction is reduced. Upon detection, it is necessary to capture minute displacement in the y direction, and large driving vibration in the z direction easily incurs noises. As the present invention can reduce the amplitude of vibration in the z direction, the present invention has an effect of reducing such noises.

Moreover, as shown in Fig. 2, the first and second detecting units 26 and 36 may have a configuration in which some of the comb-shaped electrodes protrude partially. For example, as shown in this embodiment, part of the first and second fixed-side detecting comb-shaped electrodes 29 and 39 are caused to protrude partially toward the pairs of first and second movable-side detecting comb-shaped electrodes 27 and 37. Ends 40 of the respective protrusions of the fixed-side detecting comb-shaped electrodes are located more toward the inside than ends 41 of the respective movable-side detecting comb-shaped electrodes so that all of the protrusions face the movable-side detecting comb-shaped electrodes. This structure is effective for cancelling a detection signal attributable to acceleration in the x direction. When the acceleration in the x direction is applied to the angular rate sensor of this embodiment, the rotating oscillator 10 is displaced in the x direction because the torsion beams 14 have relatively small rigidity against the displacement in the x direction. Thereby, the first and second detecting oscillators 20 and 30 are also displaced in the same direction (the x direction). Then, the comb-shaped electrodes of the detecting units slide and cause changes in the area of the opposite surfaces. Thus, the electrostatic capacitance changes. As these changes in the electrostatic capacitance are in the reversed phases between the first and second detecting units 26 and 36, these changes are components which are not cancelled by the differential detection, as in the case of the target angular rate detection signal. Accordingly, it is possible to remove the noises stemming from the acceleration in the x direction by using the above-described structure including the protrusions so as to avoid the changes in the area of the opposite surfaces even when the movable-side detecting comb-shaped electrodes slide in the x direction.

The rotating oscillator on the element substrate is formed in a thickness ranging from several tens of micrometers to several hundreds of micrometers. Meanwhile, the support beams 13 and the torsion beams 14 are formed in a width of several micrometers to impart flexibility. Accordingly, a cross section of each of the beams has a high aspect ratio in which a side in the perpendicular direction is longer than a side in the horizontal direction. Such a cross-sectional shape of the beam is similarly used for a conventional angular rate sensor using the MEMS technique. However, when vibrating the oscillator in the z direction, the support beam having the high aspect ratio in the z direction has high rigidity in the direction of vibration, and it is therefore necessary to reduce the rigidity by extending the beam, for example. Such an arrangement causes more reduction in the rigidity in the planar direction as a consequence, and may result in larger displacement in the planar direction which is unfavorable. In the present invention, the vibration in the z direction is generated by twisted shapes of the beams. The beam having the high aspect ratio in the z direction has low rigidity against the twisted direction and therefore has a characteristic that it is easier to obtain the required flexibility even if each beam is short.

Another characteristic of the rotating oscillator 10 of this embodiment is that the rotating oscillator 10 is bonded to the support substrate 2 with the single anchor 15 located in the center. In a conventional angular rate sensor supported by multiple anchors via multiple support beams, tensile or compressive stress is applied to each support beam when the entire sensor is warped by an external force, and the like. Such stress changes the rigidity of the support beam, and further causes a change in the resonant frequency. Such a problem can be avoided in this embodiment because the rotating oscillator 10 is supported by the single anchor.

The cross-sectional structure will be described more in detail with reference to Fig. 1. For the support substrate 2, a substrate 50 made of silicon, or the like, is used, and then an insulating film 51 is formed, by thermal oxidation of the silicon, on a surface to which the substrate 50 is bonded to the element substrate 3, for example. The anchor 15, the first and second driving comb supports 24 and 34, and the first and second detecting comb supports 27 and 37 formed on the element substrate 3 are at least partially bonded to the support substrate 2 via the insulating film 51. Moreover, the element substrate 3 includes a sidewall portion 52 which surrounds an outer periphery, and which is also bonded to the support substrate 2. For the wiring substrate 4, a substrate 53 made of a silicon substrate, or the like, is used, and an insulating film 54 is formed, by thermal oxidation of the silicon, on a surface of the substrate 53 opposite the element substrate 3. Wiring and electrode patterns including the first and second driving flat electrodes 21 and 31 are formed thereon. A surface insulating film 55 using a silicon nitride film, for example, is formed thereon. The wiring substrate 4 is bonded to the element substrate 3 at the sidewall portion 52 of the element substrate 3. As for the bonding method, it is possible to form a first bonding member 56 on the surface insulating film 55 of the wiring substrate 4, and a second bonding member 57 on the sidewall portion 52 of the element substrate 3, and then to attach these bonding members to each other by thermo-compression bonding, for example. A gold-tin compound, for example, may be used for the first and second bonding members 56 and 57. In this way, it is possible to define an enclosed space surrounded by the supporting substrate 2, the wiring substrate 4 and the sidewall portion 52. By reducing air resistance in the space by depressurizing the inside thereof, the amplitude of vibration is increased, and thereby the detection sensitivity can be improved.

Since the rotating oscillator 10 is displaced in the z direction by its rotational vibration, adequate spaces are provided above and below the rotating oscillator 10 so that the rotating oscillator 10 does not come in contact with the support substrate 2 and with the wiring substrate 4. In this embodiment, the space at the side of the support substrate 2 is provided as cavities 58 formed by partially removing the insulating film 51 and the substrate 50 of the support substrate 2. Such a countermeasure is necessary in a case where the maximum displacement of the rotating oscillator 10 in the z direction is larger than the thickness of the insulating film 51. In this case, it is possible to remove only the insulating film 51 in a portion close to the rotational axis 12 where the displacement in the z direction is smaller than the thickness of the insulating film 51. For example, it is only necessary to remove the insulating film 51 in a portion directly below each torsion beam 14. The space at the side of the wiring substrate 4 is provided by forming the sidewall portion 52 of the element substrate 3 as protruding more than the rotating oscillator 10. Such a shape may be formed by use of a method of firstly removing portions of the element substrate other than the protrusion by dry etching, then coating a resist serving as a mask by spray coating, then patterning the shapes of the rotating oscillator and the like, and then processing the element substrate again by dry etching, for example.

Electrical connection of the units in the element substrate 3 to the outside is achieved as will be described below, for example. In the element substrate 3, the rotating oscillator 10, the first driving comb support 24, the second driving comb support 34, the first detecting comb support 28 and the second detecting comb support 38 are separated from one another, and are bonded to the support substrate 2 via the insulating film 51. Hence, these constituents are electrically isolated from one another. Electricity is individually supplied from outside to these constituents. Thus, as shown in Figs. 1 and 2, first electrical connection pads 59 are respectively provided on the anchor 15, the first and second driving comb supports 24 and 34 and the first and second detecting comb supports 28 and 38. Similarly, second electrical connection pads 60 are formed in opposite positions on the wiring substrate 4. Then, the electrical connection is achieved by bonding the corresponding pads 59 and 60 together. As similar to the first and second bonding members 56 and 57, the first and second electrical connection pads 59 and 60 can be made of a gold-tin compound, and then be attached to one another by thermo-compression bonding. An aperture is formed in the surface insulating film 55 immediately below each of the second electrical connection pads 60, so that a wiring pad 61 formed on the insulating film 54 is electrically connected to an external electrical connection pad 63 disposed outside the sidewall portion 52 with a wiring 62. The first and second driving flat electrodes 21 and 31 are also led out to external electric connection pads outside the sidewall with a wiring. In this way, the first driving unit 22 is caused to generate a driving force by applying an electric potential difference between the anchor 15 and the first driving comb support 24 via the pad 63, while a signal from the first detecting unit 26 can be detected by detecting a change in the electrostatic capacitance between the anchor 15 and the first detecting comb support 28, for example.

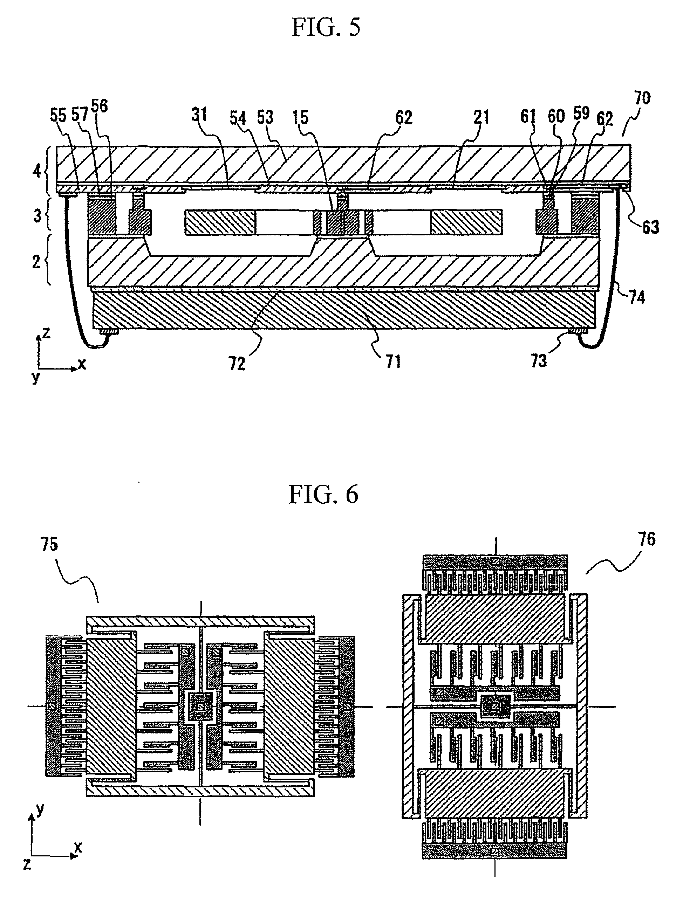

To obtain a function as the angular rate sensor, it is necessary to provide a control unit which controls drives of the oscillators, and which detects minute changes in the electrostatic capacitance. The control unit also includes the previously-mentioned constituents for detection, namely, the subtracter 43, the angular rate detecting circuit 44, the adder 45 and the acceleration detecting circuit 46. An angular rate sensor module 70 including the above control unit can be configured as shown in Fig. 5, for example. A control integrated circuit (IC) 71 corresponding to the control unit is connected to the support substrate 2 on an opposite surface to the element substrate 3 via an adhesive layer 72, and an external electrical connection pad 73 on a surface of the control IC 71 can be connected to the external electrical connection pad 63 on the wiring substrate 4 with a wire 74 by means of wire bonding, for example. Alternatively, the control unit may be built in the wiring substrate 4. In this way, it is possible to achieve a smaller sensor without providing the control IC 71 separately. It is also possible to form the control unit on the support substrate 2 on an opposite surface to the element substrate 3, for example.

A second embodiment of the present invention shows an example of achieving biaxial angular rate detection by arranging two structures of the angular rate sensor which are described in the first embodiment. As shown in Fig. 6, a first sensor unit 75 can detect an angular rate around the x axis while a second sensor unit 76 can detect an angular rate around the y axis. In addition, as described previously, it is also possible to detect acceleration in the y direction with the first sensor unit 75, and to detect acceleration in the x direction with the second sensor unit 76 by obtaining the sum of the detection signals respective outputted from the first and second detecting units.

Next, other embodiments each of a structure inside the element substrate will be described.

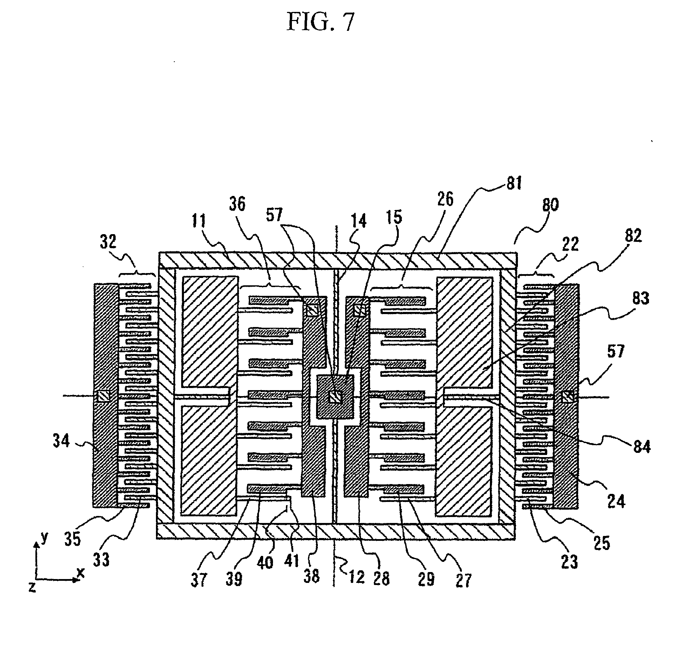

An angular rate sensor according to a third embodiment of the present invention will be described with reference to Fig. 7. The structure of the rotating oscillator of this angular rate sensor is different from that in the first embodiment shown in Fig. 2. A rotating oscillator 80 of this embodiment includes two pieces of first frames 81 which are bonded to the respective torsion beams 14, and which extend in the x direction; and two pieces of second frames 82 which are bonded to the first frames 81, and which extend in the y direction. The first movable-side driving comb-shaped electrodes 23 of the first driving unit 22 are bonded to the corresponding second frame 82 on the opposite side to the rotational axis 12, and each of detecting oscillators 83 is bonded to the corresponding second frame 82 via a support beam 84 on the same side of the rotational axis 12. The support beam 84 has flexibility so that the detecting oscillator 83 can be displaced in the y direction. In this embodiment, when the Coriolis force in the y direction is applied to any one of the detecting oscillators 83, the detecting oscillator 83 is displaced as being rotated pivotally around a support point of the corresponding support beam 84, located at the side of the second frame 82. Accordingly, it is possible to increase the displacement of the first movable-side detecting comb-shaped electrodes 27 in the y direction as compared to the parallel displacement of the relevant detecting oscillator 83 in the y direction. Thus, this configuration has an effect of enhancing the detection sensitivity. Moreover, the second frames 82 are hardly displaced upon application of the Coriolis force. Hence, the first movable-side driving comb-shaped electrodes 23 are hardly displaced in the y direction. Since the gaps in the y direction between the first movable-side driving comb-shaped electrodes 23 and the first fixed-side driving comb-shaped electrodes 25 are less variable, this configuration can achieve stabilized driving.

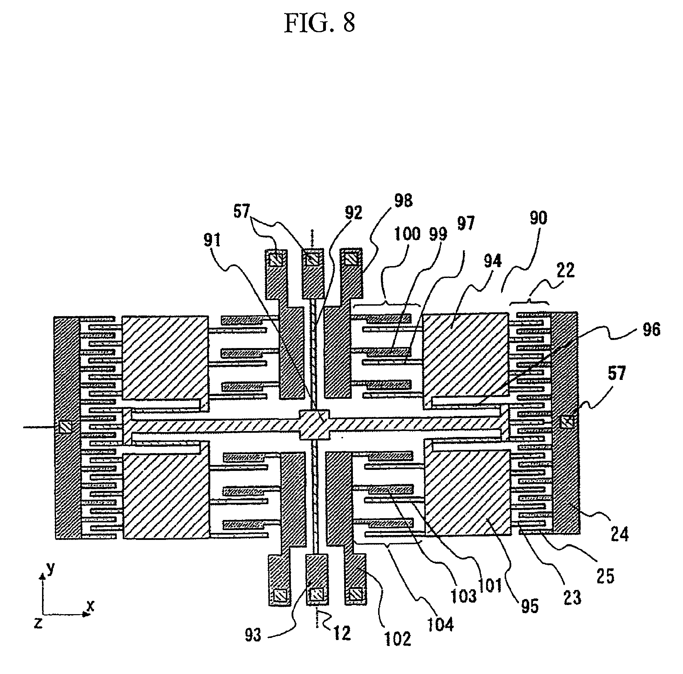

An angular rate sensor according to a fourth embodiment of the present invention will be described with reference to Fig. 8. This configuration is different from the first embodiment shown in Fig. 2 in that each of the detecting oscillators located at the right and left sides is divided into two parts in the y direction. Since this example employs a laterally symmetric layout with the rotational axis 12 being set as the axis of symmetry, as in the case of the first embodiment, one side of the configuration will be explained herein. A rotating oscillator 90 includes a frame 91 located in the center, and extending in the x direction. The rotating oscillator 90 is supported by one end of each of the torsion beams 92 respectively extending in two directions along the y direction. The other end of each torsion beam 92 is connected to the corresponding one of anchors 93 which are partially bonded to the support substrate 2. A first detecting oscillator 94 and a second detecting oscillator 95 are bonded to both sides of the frame 91 via support beams 96, and are supported as being displaceable in the y direction. First movable-side detecting comb-shaped electrodes 97 are bonded to the first detecting oscillator 94 at the side close to the rotational axis, and respectively face first fixed-side detecting comb-shaped electrodes 99 bonded to first detecting comb fixing member 98 that is partially bonded to the support substrate 2. These electrodes 97 and 99 collectively constitute a first detecting unit 100. Similarly, second movable-side detecting comb-shaped electrodes 101 are bonded to the second detecting oscillator 95 at the side close to the rotational axis, and respectively face second fixed-side detecting comb-shaped electrodes 103 bonded to second detecting comb fixing member 102 that is partially bonded to the support substrate 2. The electrodes 101 and 103 constituents collectively constitute a second detecting unit 104. As in the case of the first embodiment, the driving unit 22 is formed on the first and second detecting oscillators 94 and 95 and on the frame 91 at the side far from the rotational axis 12. In the first embodiment, the anchor 15 and the first and second detecting comb supports 28 and 38 are surrounded by the rotating oscillator 10. For this reason, the electrical connection pads 57 in the element substrate cannot be led out to the outside of the rotating oscillator 10. In contrast, in this embodiment, it is possible to draw the electrical connection pads 57 to the outside of the rotating oscillator 90. Hence, it is possible to improve a layout freedom of the electrical connection pads 57.

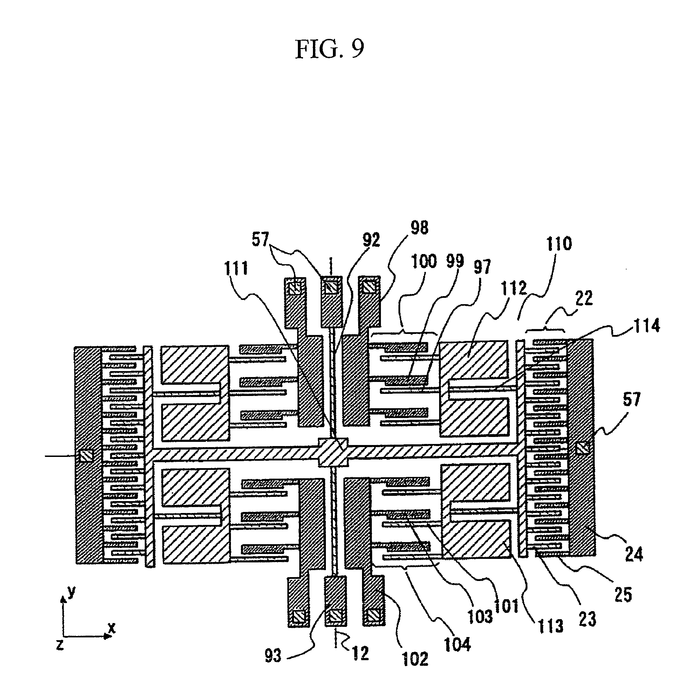

An angular rate sensor according to a fifth embodiment of the present invention will be described with reference Fig. 9. This embodiment is equivalent to the configuration in which each of the detecting oscillators is divided into two parts as described in the fourth embodiment, and which is further provided with the characteristic of the third embodiment. As shown in Fig. 9, a rotating oscillator 110 of this embodiment includes a frame 111 which is formed into an H-shape that extends in the *y* direction to the side of the detecting oscillators, opposite the rotational axis. All of the first movable-side driving comb-shaped electrodes 23 are connected to the frame 111. The first detecting oscillator 112 and the second detecting oscillator 113 are connected to the frame 111 via support beams 114. In this embodiment, the first movable-side driving comb-shaped electrodes 23 are connected to the frame 111 which is hardly displaceable in the *y* direction upon application of the Coriolis force. Accordingly, the gaps in the *y* direction between the first movable-side driving comb-shaped electrodes 23 and the second fixed-side driving comb-shaped electrodes 25 are hardly variable. Thus, this configuration can achieve stabilized driving.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An angular rate sensor formed into a planar shape and configured to detect an angular rate around a first axis in the plane, the angular rate sensor comprising:
a rotating oscillator rotatably supported in the plane and around the rotational axis in a direction of a second axis perpendicular to the first axis;
vibration generating means which rotationally vibrates the rotating oscillator; and
a first detecting oscillator and a second detecting oscillator which are disposed inside the rotating oscillator and separately on the right side and the left side of the rotational axis, and which are supported as being displaceable in a direction of the second axis,
wherein a first detecting unit and a second detecting unit, which detect vibrations of the respective first and second detecting oscillators in the direction of the second axis due to the Coriolis force, are respectively provided closer to the rotational axis than the first and second detecting oscillators are.

2. The angular rate sensor according to claim 1, wherein the angular rate around the first axis is detected by finding the difference between detection signals detected in mutually reversed phases respectively by the first detecting unit and the second detecting unit.

3. The angular rate sensor according to claim 1, wherein acceleration in the direction of the second axis is detected by calculating the sum of detection signals detected in the same phase respectively by the first detecting unit and the second detecting unit.

4. The angular rate sensor according to any one of claims 1 to 3, wherein
the first and second detecting units comprise:
a plurality of movable-side detecting comb-shaped electrodes bonded to the first and the second detecting oscillators; and
a plurality of fixed-side detecting comb-shaped electrodes each of which is a counterpart of the corresponding movable-side detecting comb-shaped electrode, and which are fixed in a way that part of side faces thereof face the movable-side detecting comb-shaped electrodes, and
a change in electrostatic capacitance due to a change in a gap between each movable-side detecting comb-shaped electrode and the corresponding fixed-side detecting comb-shaped electrode is used as detecting means.

5. The angular rate sensor according to claim 4, wherein one of surfaces where the movable-side detecting comb-shaped electrodes and the fixed-side detecting comb-shaped electrodes face each other includes a portion partially protruding toward the other surface.

6. The angular rate sensor according to any one of claims 1 to 5, wherein the vibration generating means comprises first driving means which applies a force to the rotating oscillator in the perpendicular direction to the plane, the first driving means being disposed at an opposite side of the rotational axis as viewed from the first detecting oscillator; and second driving means which applies a force to the rotating oscillator in the perpendicular direction to the plane, the second driving means being disposed at an opposite side of the rotational axis as viewed from the second detecting oscillator.

7. The angular rate sensor according to claim 6, wherein the vibration generating means comprises third driving means which applies a force to the rotating oscillator in the perpendicular direction to the plane, the third driving means being disposed in any one of one side and two sides of a surface of the first detecting oscillator parallel to the plane; and fourth driving means which applies a force to the rotating oscillator in the perpendicular direction to the plane, the fourth driving means being disposed in any one of one side and two sides of a surface of the second detecting oscillator parallel to the plane.

8. The angular rate sensor according to claim 6, wherein
each of the first and second driving means comprises:
a plurality of movable-side detecting comb-shaped electrodes bonded to the rotating oscillator; and
a plurality of fixed-side driving comb-shaped electrodes fixed in a way that part of side faces thereof face the movable-side driving comb-shaped electrodes, and
a driving force is generated by applying an electric potential difference between each movable-side driving comb-shaped electrode and the corresponding fixed-side driving comb-shaped electrode.

9. The angular rate sensor according to claim 7, wherein each of the third and fourth driving means comprises:
a first driving flat electrode disposed so that at least part of the first driving flat electrode faces the surface of the plane of the detecting oscillator parallel to the plane with a gap interposed in between; and
a second driving flat electrode disposed so that at least part of the second driving flat electrode faces the surface of the second detecting oscillator parallel to the plane with a gap interposed in between.

10. A multiaxial detection type angular rate sensor comprising a first sensor unit and a second sensor unit which include the angular rate sensor according to any one of claims 1 to 9, and which are disposed perpendicular to each other, wherein
the first sensor unit detects an angular rate around the first axis, and
the second sensor unit detects an angular rate around the second axis.

11. A multiaxial angular rate sensor according to claim 10, provided with an acceleration detecting function, wherein
the first sensor unit detects acceleration in the direction of the second axis, and
the second sensor unit detects acceleration in a direction of the first axis.
